Europäisches Patentamt

**European Patent Office**

**Office européen des brevets**

(11) Numéro de publication: **0 265 397 B1**

(12) **FASCICULE DE BREVET EUROPEEN**

(45) Date de publication de fascicule du brevet: **01.04.92** (51) Int. Cl.5: **A01B 11/00**

(21) Numéro de dépôt: **87830362.7**

(22) Date de dépôt: **15.10.87**

(54) **Machine pour le bêchage du terrain et outil destiné à ce type de machine.**

(30) Priorité: **17.10.86 IT 354586**
     **11.11.86 IT 505186 U**

(43) Date de publication de la demande:
     **27.04.88 Bulletin 88/17**

(45) Mention de la délivrance du brevet:
     **01.04.92 Bulletin 92/14**

(84) Etats contractants désignés:
     **DE FR GB NL**

(56) Documents cités:
     **AT-B- 366 534**
     **DE-A- 3 545 970**
     **DE-C- 92 129**
     **DE-C- 277 474**
     **US-A- 1 624 610**

(73) Titulaire: **Selvatici, Franco**
     **Via L. Rodriguez, 4**
     **I-40068 S. Lazzaro di Savena (BO)(IT)**

(72) Inventeur: **Selvatici, Franco**
     **Via L. Rodriguez, 4**
     **I-40068 S. Lazzaro di Savena (BO)(IT)**

(74) Mandataire: **Pederzini, Paolo**
     **c/o BUGNION S.p.A. Via Dei Mille, 19**
     **I-40121 Bologna(IT)**

## Description

La présente invention a trait à une machine pour le bêchage du terrain selon le preambule de la revendication 1 et à un outil à associer à cette machine selon le preambule de la revendication 5. Une telle machine et un tel outil sont connues de US-A-1 624 610. Une machine identique est décrite dans EP-A-289 517 correspondant au WO-A-8 307 734, lequel document appartient à l'état de la technique visé à l'article 54(3) OEB. Dans le domaine de la technique des machines agricoles on connaît des machines pour le bêchage du terrain comportant une pluralité d'outils mûs conformément au mouvement exécuté à la main. Essentiellement, chaque outil associé à ces machines de type automoteur ou bien portées à l'arrière par un tracteur et actionnées par celui-ci à travers une prise de force, comportent une lame ou bêche et un bras de support de cette dernière. Le bras est pivoté à sa partie supérieure sur la manivelle d'un arbre vilebrequin transversal à la direction d'avance et le guidage a lieu par des bras articulés. Le bras vilebrequin et les bras articulés sont supportés par un bâti de support de manière que les manivelles de l'arbre vilebrequin, les bras porte-lame, les bras articulés et le bâti de support constituent une série de figures quadrangulaires articulées. Un robuste carter de couverture des lames est solidarisé de la partie arrière du bâti de support.

Le mouvement de chaque bras est tel que la lame effectue d'abord un mouvement sensiblement vertical de pénétration dans le terrain et ensuite un mouvement à peu près horizontal de soulèvement et lancement de la motte détachée du terrain contre le carter.

La construction de ces machines est assez robuste de manière qu'elles peuvent supporter les efforts auxquels elles sont soumises.

La profondeur de travail est un élément très important surtout quand il s'agit d'opérer sur des terrains marécageux, sableux et en tout cas d'une certaine consistance, du fait que les machines à bêcher sont dimensionnées et différenciées en tenant compte de ce donnée. La profondeur de travail est en effet directement proportionnelle, dans des limites étroites, à la longueur des manivelles de l'arbre vilebrequin. Une augmentation de la longueur des manivelles de l'arbre vilebrequin entraîne une augmentation importante des masses en mouvement et des dimensions des organes lesquels doivent supporter des efforts plus grands et enfin une augmentation remarquable de la puissance à délivrer, en vue de réussir à actionner la machine qui, dans ces cas, est destinée à opérer à des profondeurs élevées.

Ceci implique beaucoup de difficultés tant pour l'acheteur que pour l'utilisateur de ces machines.

En effet les différentes cultures et les différents terrains ne demandent pas tous la même profondeur de travail et par conséquent chaque utilisateur devrait être pourvu de plusieurs machines, étant donné qu'il serait impensable de bêcher un terrain à une profondeur de travail considérablement supérieure ou inférieure à celle prévue: dans le premier cas on pourrait endommager la machine ou les outils et dans le second cas on aurait une consommation inutile de combustibile.

Au contraire, s i l'on devait opérer sur des terrains qui ne sont pas très lourds à travailler, ce qui permettrait d'augmenter la vitesse d'avance de la machine à bêcher, il faudrait toujours augmenter la vitesse de rotation de l'arbre vilebrequin en vue de permettre à la lame d'effectuer la même opération de bêchage à une vitesse plus élevée, proportionnelle à une vitesse d'avance supérieure. Mais ceci impliquerait une consommation plus élevée de combustibile et une usure plus rapide de toutes les parties en mouvement de l'outil.

Le but de la présente invention est par conséquent celui d'éliminer les inconvénients cités ci-dessus relativement à la nécessité de disposer de différentes machines en fonction de la profondeur et de la vitesse de travail et du type de terrain à travailler.

L'invention, telle qu'elle est caractérisée par les revendications, résout le problème abordé grâce à une machine avec les caractéristiques selon la partie caractérisante de la revendication 1 et à un outil à bêcher avec les caratéristiques selon la partie caractérisante de la revendication 5.

L'un des avantages de la présente invention réside essentiellement en ce qu'il est possible d'utiliser une seule machine de puissance, dimensions et encombrement réduits pour le bêchage de terrains de n'importe quelle consistance et à des profondeurs même très différentes.

Un autre avantage de l'invention est représenté par l'économie réalisable tant du point de vue de la production que du point de vue de l'utilisation. En ce qui concerne le producteur, celui-ci peut programmer de façon moins fortuite le nombre et le type des machines à réaliser et réduire le nombre des pièces emmagasinées. En ce qui concerne l'utilisateur il peut disposer d'une seule machine de dimensions et puissance limitées mais capable de bêcher sans aucun problème tant à de basses profondeurs qu'à des profondeurs élevées.

Un autre avantage de l'invention consiste essentiellement à pouvoir utiliser au mieux la machine à bêcher grâce à une différente mise en place des lames. En effet si l'on dispose les lames à des niveaux de travail allant décroissant par rapport à la direction d'avance de la machine à bêcher, on peut bêcher à une profondeur presque double par rapport à celle qu'on peut atteindre avec une seule lame. Au contraire, si l'on dispose les lames au même niveau de travail on peut doubler la vitesse d'avance du fait que les lames détachent chacune une respective motte d'une hauteur déterminée.

Un autre avantage de l'invention est représenté par la simplicité de l'outil proposé lequel, par de simples réglages de mise en place, permet d'atteindre des résultats bien différents tout en utilisant le même outil.

Un autre avantage encore est lié à la possibilité de réaliser un meilleur broyage du terrain si l'on dispose les lames à des niveaux allant croissant de manière que la lame arrière effectue un broyage de la masse qui est en train d'être détachée par la lame avant; on obtient également un meilleur broyage du terrain à de grandes profondeurs de travail grâce au fait que les mottes extraites ne sont pas directement le résultat de la profondeur de travail mais elles sont obtenues d'au moins deux profondeurs qui, additionnées, sont égales à celle de travail.

Un autre avantage encore de la présente invention est représenté par la possibilité de rendre les machines actuellement existantes plus universelles sans devoir soutenir des frais excessifs étant donné que les outils selon la présente invention peuvent être également appliqués à ces machines.

L'invention est décrite plus en détail par la suite à l'aide des dessins annexés qui en représentent une forme d'exécution non limitative donnée à simple titre d'exemple.

La figure 1 est une vue schématique de côté de la machine pour le bêchage du terrain selon la présente invention, dont certaines parties ont été enlevées pour mieux en mettre en évidence d'autres.

La figure 2 est une vue de côté de l'outil selon la présente invention, démonté en ce qui concerne ses parties essentielles, lequel peut être associé à la machine de la figure 1.

La figure 3 est une vue en plan de l'outil de la figure 2, représenté assemblé.

La figure 4 montre en détail et à titre d'exemple le schéma de travail de la machine de la figure 1.

Les figures 5 et 6 montrent schématiquement en vue de côté deux autres configurations différentes de l'outil selon la présente invention.

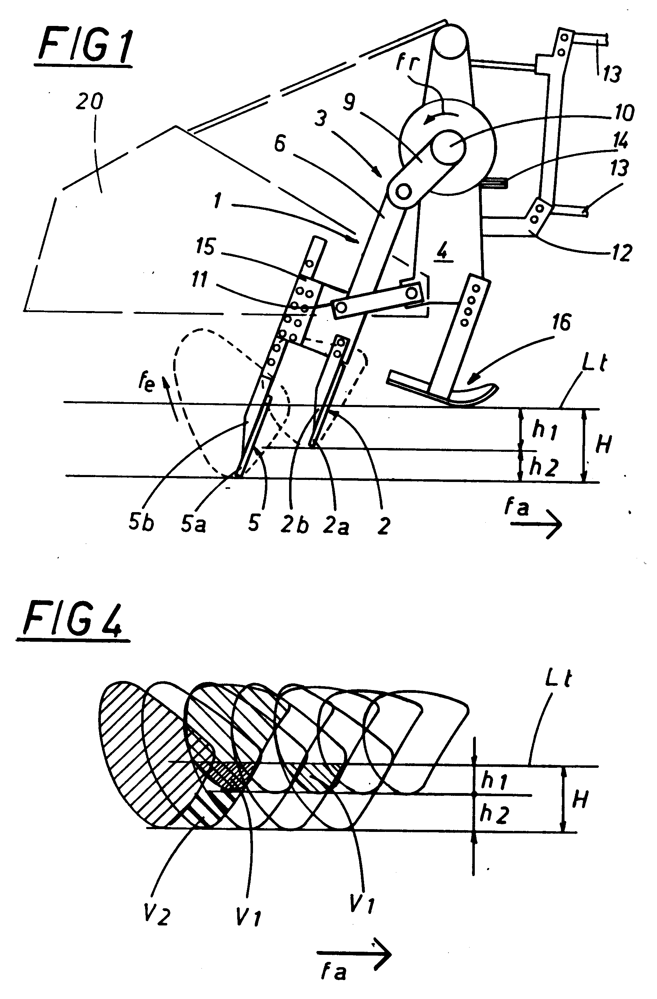

En se référant à la figure 1, la machine pour le bêchage du terrain comporte une pluralité d'outils 1, dont un seulement est visible sur la figure 1 pour plus de simplicité.

Chaque outil 1, pourvu à sa partie inférieure d'une lame 2, est articulé à sa partie supérieure sur une manivelle respective 9 d'un arbre vilebrequin 10 supporté par un bâti de support 4 et, à sa partie inférieure, sur l'une des extrémités d'un bras articulé 11 pivoté à son extrémité libre sur le bâti de support 4.

Les outils 1 avec les correspondants manivelle 9 et bras articulé 11 et le bâti de support 4, constituent un égal nombre de figures quadrangulaires articulées 3 et ils sont disposés à l'arrière du bâti de support 4.

L'arbre vilebrequin 10 est entraîné, à travers un mécanisme dont on a représenté sur la figure 1 seulement un arbre avant cannelé 14, par la prise de force d'un tracteur agricole (non représenté) par lequel la machine est portée, ou par le moteur de cette dernière si la machine est de type automoteur.

Les manivelles 9 de l'arbre vilebrequin 10 ont de préférence une disposition angulaire décalée l'une par rapport à l'autre de manière à soumettre l'arbre vilebrequin 10 et toute la machine à un effort plus uniforme et continu: sur la figure 1 on a illustré une seule manivelle 9 pour plus de clarté.

Le bâti de support 4, ici du type porté par un tracteur agricole, est pourvu à sa partie avant d'un attelage à trois points 12 par lequel il est fixé au dispositif de relevage hydraulique 13 du tracteur agricole.

Le bâti de support 4 est pourvu à l'avant d'une paire de pieds 16 (semelles ou roues) réglables en hauteur pour déterminer la profondeur maximale de bêchage. En effet, la profondeur de bêchage peut être réglée temporairement en agissant sur le dispositif de relevage hydraulique 13 du tracteur.

Le bâti de support 4 est pourvu à l'arrière d'un robuste carter 20 (représenté sur la figure 1 par une ligne interrompue pour plus de clarté) destiné à couvrir les outils 1 et à contenir les mottes que les outils 1 lancent contre lui.

La machine à bêcher selon l'invention prévoit que chaque outil 1 soit pourvu d'au moins deux lames 2 et 5, ou d'un autre outil techniquement équivalent, disposées en série et susceptibles d'être mises en place à un niveau réglable au moins en hauteur en fonction de la vitesse de travail de la machine le long de sa direction d'avance (fa), de la profondeur de travail et du degré de broyage des mottes.

Chaque outil 1, pourvu à sa partie inférieure de la paire de lames avant 2 et arrière 5 par rapport à la direction d'avance de la machine à bêcher (voir la flèche fa sur les figures), est articulé, à sa partie supérieure, à une manivelle respective 9 de l'arbre vilebrequin 10 qui le met en mouvement (voir la figure 1) et, à sa partie inférieure, à l'une des extrémités du bras articulé 11 qui sert à le guider pendant son mouvement.

Chaque outil 1 comporte une paire de lames 2 et 5 (ou tout autre outil techniquement équivalent) destinées à pénétrer dans le terrain et un bras 6 de support desdites lames articulé à la correspondante manivelle 9 de l'arbre vilebrequin 10 et au bras articulé 11.

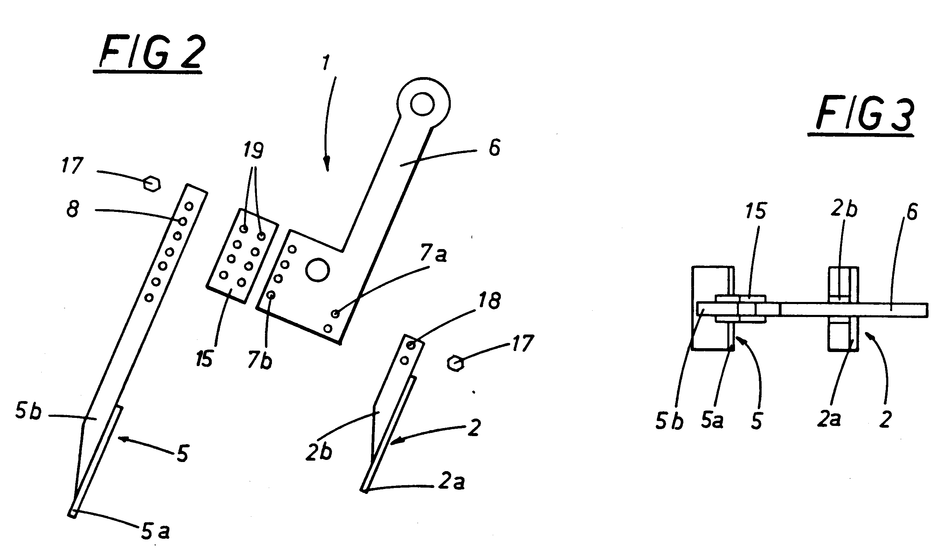

Selon une forme d'exécution de l'outil 1 conformément à la présente invention et tel que représenté sur les figures 1 et 2, les lames 2 et 5 sont supportées par le bras 6 de manière qu'elles agissent à des profondeurs différentes, respectivement h1 et H, et notamment - ce qui est bien évident - la lame avant à une profondeur h1 plus petite et celle arrière à une profondeur H plus grande.

La lame 2 est formée de la véritable lame 2a, orthogonale à la direction d'avance fa de la machine et d'une paire de bras parallèles 2b solidaires de la première et disposés aux deux côtés du bras 6 auquel ils sont fixés au moyen de boulons 17 qui les traversent en correspondance de respectives séries de trous 18 et 7a.

Le bras 6 supporte au moins la lame arrière 5 par des moyens de réglage qui permettent de varier, au moins dans certaines limites, le niveau de la position de la lame 5.

Lesdits moyens de réglage comportent une série de trous 7b ménagés dans le bras 6 parallèlement à la série de trous 7a pour le support de la lame avant 2 et une série de trous 8 ménagés sur les bras 5b de la lame arrière 5.

De préférence, la lame 5 est pourvue d'un seul bras 5b disposé coplanaire avec le bras 6 et fixé à celui-ci par une paire de plaques de retenue 15 pourvues de trous et disposées en sandwich aux deux côtés de la lame 5 et du bras 6 de manière que les différents trous 7b, 8 et 19 (des plaques de retenue 15) soient alignés pour permettre le passage des boulons 17 qui bloquent tout l'ensemble (voir par exemple la figure 2).

Le nombre des trous ménagés sur la lame arrière 5 est plus grand que celui nécessaire pour un engagement stable et correct aux plaques de retenue 15. De cette manière on peut faire coulisser la lame 5 par rapport au bras 6 sans rendre leur liaison moins valide et robuste.

Si l'on regarde la figure 2 on peut remarquer que la lame 5 et le bras 6 ont un nombre divers de trous 8 et 7b, alors que les plaques de retenue 15 ont longitudinalement un nombre de trous égal au nombre de trous du bras 6. Cette exécution apparaît très avantageuse du fait que l'on peut faire coulisser la lame 5 par rapport au bras 6 mais, en même temps et si la lame arrière 5 ne devait pas être nécessaire, ladite construction permet d'avoir un bras 6 seulement de peu plus lourd que celui structuré pour le support de la seule lame avant 2. Cette possibilité est très importante si l'on tient compte du fait que la machine à bêcher est munie de plusieurs outils 1 et que la réduction de poids d'un outil 1 comporte une réduction remarquable des masses en mouvement et par conséquent une réduction de la puissance absorbée par la machine.

Sur la figure 1 on a représenté en traits interrompus les trajectoires des extrémités inférieures des lames 2 et 5 pendant le fonctionnement de la machine. On peut ici remarquer que, par l'effet des bras articulés 11, pendant que l'arbre vilebrequin 10 tourne dans le sens inverse des aiguilles d'une montre (flèche f$_r$), les extrémités inférieures des lames 2 et 5 parcourent leurs trajectoires respectives tournant dans le sens des aiguilles d'une montre (flèches f$_e$).

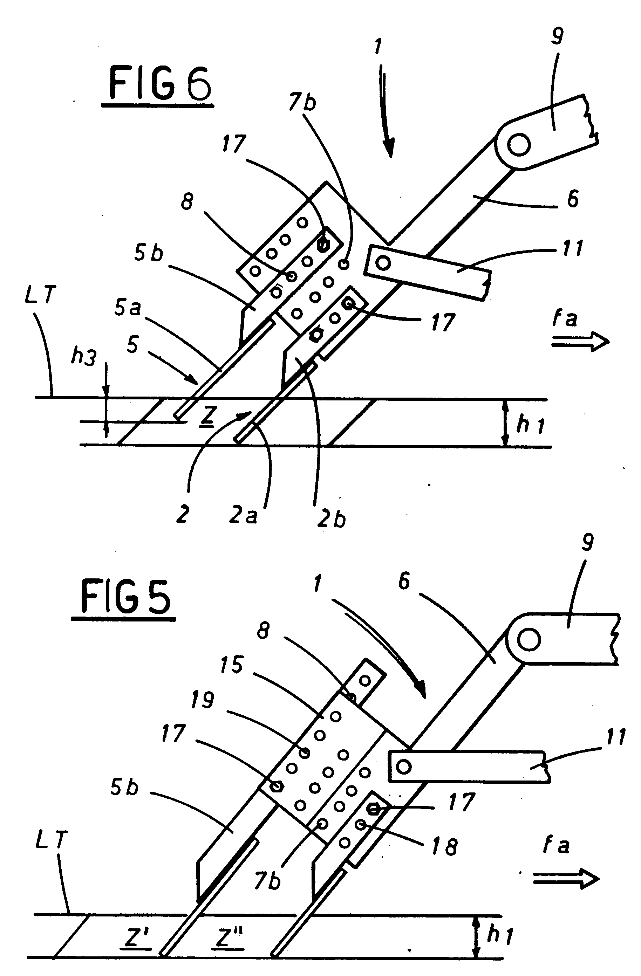

Si l'on regarde la figure 4, où l'on a représenté les trajectoires précédentes pendant des instants différents en succession par rapport à la ligne du terrain indiquée en L$_t$, on peut remarquer que la lame avant 2 déplace chaque fois une quantité de terrain indiquée en V1 et localisée entre la ligne du terrain L$_t$ et la profondeur maximale h1 atteinte par celle-ci. Au contraire, la lame arrière 5 déplace chaque fois une quantité de terrain indiquée en V2 et localisée entre la profondeur h1 atteinte par la lame avant 2 et une profondeur h2 atteinte par la même lame arrière 5. Il est intéressant de remarquer que la lame arrière 5 travaille chaque fois à une profondeur plus élevée dans la zone où la lame avant a précédemment opéré. En d'autres mots, une quantité déterminée de terrain qui arrive jusqu'à une profondeur H est bêchée presque simultanément par la lame avant 2 sur une profondeur h1 e par la lame arrière 5 en ce qui concerne la profondeur restante h2.

En conséquence de cela, en utilisant la machine et/ou l'outil 1 selon la présente invention le bêchage du terrain cause l'engendrement de mottes dont les dimensions et le poids sont la moitié de celles engendrées par une machine traditionnelle capable d'opérer à la même profondeur que ladite machine, mais de dimensions et de puissance plus élevées. Ceci signifie que l'opération de bêchage est exécutée de manière plus efficace étant donné que les mottes qui sont lancées contre le carter 20 ont des dimensions plus petites et sont donc broyées avec plus de facilité.

Si l'on varie de manière convenable la position de la lame arrière 5 le long du bras 6 on peut augmenter ou réduire la profondeur h2 que la lame 5 peut atteindre et donc la profondeur totale de bêchage.

Selon une autre forme d'exécution l'outil 1 est structuré de manière que les deux lames 2 et 5 peuvent être positionnées de manière réglable l'une par rapport à l'autre du moins en ce qui concerne leur niveau, en fonction de l'opération de bêchage à exécuter.

A cet effet, le bras 6 est muni de plusieurs séries de trous 7b et 7a pour la fixation à celui-ci des bras 2b et 5b des lames 2 et 5.

En se référant maintenant aux figures 5 et 6, on peut remarquer qu'il est possible d'exécuter le bêchage à des conditions de travail différentes en fonction des différents positionnements relatifs des lames 2 et 5. Notamment, en se référant à la figure 5, le même outil 1 de la figure 1 a les lames 2 et 5 disposées au même niveau de travail h1 et il est donc en mesure de bêcher à une vitesse sensiblement double par rapport à celle possible avec une seule lame 2.

En effet les lames 2 et 5 détachent simultanément des mottes Z′ et Z″ d'égale hauteur h1 de sorte que la machine à bêcher peut avancer à une vitesse double par rapport à celle normale en vue de permettre aux deux lames 2 et 5 de pénétrer toujours dans une zone du terrain qui n'a pas encore été bêchée.

Si l'on varie la position réciproque des lames 2 et 5, c'est-à-dire si on les dispose à des niveaux de travail allant croissant selon la direction d'avance fa de la machine à becher (voir la figure 6), on peut obtenir un broyage parfait des mottes Z.

Cette fois-ci les mottes Z sont détachées par la seule lame avant 2, pendant que la lame arrière 5, située à un plus grand niveau, indiqué en h3 sur la figure 6, commence leur broyage avant qu'elles soient lancées en arrière vers le carter 20, par les lames 2 et 5.

Tel que représenté sur la figure 6, les trous 7b sont disposés en rangées de manière que les deux lames, ou bien surtout la lame arrière 5 peut être mise en place par rapport à celle avant également en ce qui concerne la distance réciproque. Ce réglage est important pour établir les dimensions des mottes Z′ détachées par la lame arrière 5.

Au début de chaque étape de bêchage la machine sera graduellement baissée par l'intermédiaire du dispositif de relevage hydraulique 13 du tracteur, jusqu'à quand les pieds 16 prennent appui sur le terrain.Cette opération permet,dans le cas où les deux lames seraient disposées à des niveaux de travail allant décroissant, d'éviter que la lame 5 soit obligée de pénétrer dans le terrain sur toute sa profondeur de bêchage pendant un seul cycle, ce qui causerait son endommagement.

**Revendications**

1. Machine pour le bêchage du terrain, munie d'une pluralité d'outils (1) pour le bêchage du terrain pourvus d'une première lame ou bêche correspondante (2), et dont chacun constitue l'un des côtés d'une figure quandrangulaire articulée (3) opposé au côté fixe de cette figure quandrangulaire formé par un bâti (4) de support des outils (1), lesdits outils (1) étant pourvus d'une deuxième lame (5) disposée en série à la première, caracterisée en ce que chacune des deuxièmes lames (5) disposée en série à la première lame (2) est apte à être positionée de maniére réglable, respectivement par rapport à la première lame, au moins en ce qui concerne le niveau de la profondeur de travail et du degré de broyage de mottes (Z).

2. Machine selon la revendictaion 1, caracterisée en ce que la première lame (2) est supportée de manière réglable respect à son support au moins en ce qui concerne le niveau de la profondeur de travail et du degré de broyage de mottes (Z).

3. Machine selon les revendications 1 et 2, caracterisée en ce que la deuxième lame (5) est supportée par un bras (6) qui supporte la premiére lame (2) et pourvu des moyens de réglage au moins de la position de la lame (5), comportant une série de trous alignés (7b) pour le passage de moyens de fixation , ménagés dans ladite lame (5) et respectivement dans ledit bras (6), le nombre des trous (7b ou 8) présentés par ledit bras (6), ou bien par ladite lame (5), étant plus grande que le nombre de trous nécessaires à fixer cette dernière au bras (6) correspondant.

4. Machine selon la revendications 1 et 3, caracterisée en ce que ladite lame arrière (5) comporte une véritable lame (5a) orthogonale à l'épaisseur du dit bras (6) et un bras (5b) solidaire de celle-ci, lequel est pourvu desdits trous (8) et est disposé coplanaire avec ledit bras (6) de support de l'outil (1), aux côtés desdits bras (5b, 6) étant prévue une paire de plaques (15) de retenue de ceux-ci, pourvues de trous en correspondance des trous (8, 7b) dudit bras (6) et de ladite lame (5).

5. Outil pour le bêchage du terrain à utiliser sur une machine a bêcher, cet outil étant pourvu d'une lame ou bêche correspondante (2) qui constitue l'un des côtés d'une figure quadrangulaire formée par un bâti (4) de support de l'outil (1) et par une deuxième lame (5) disposée en série à la première, caracterisé en ce que la deuxième lame (5), comporte une véritable lame (5a) orthogonale à l'epaisseur d'un bras (6) de support du dit outil, et un bras (5b) solidaire de celle-ci, lequel est pourvu des trous (8) alignés, pour le passage de moyens de fixation ménagés dans ladite lame (5) et respectivement dans ledit bras (6), et est disposé coplanaire avec ledit bras (6) de support de l'outil (1); aux côtés desdits bras (5b, 6) étant prévue une paire de plaques (15) de retenue de ceux-ci, pourvues de trous en correspondance des trous (8, 7b) dudit bras (6) et de ladite deuxième lame (5) pour le passage des moyens de fixation de la deuxième lame (5) de manière réglable, respect à la première lame (2) au moins en ce qui concerne le niveau de la profondeur de travail et du degré de broyage de mottes (2); les dites plaques de retenue (15) sont pourvues d'un nombre de trous alignés (19) égal au nombre de trous (7b) présenté par le bras (6) et en ce que le bras (5b) de la deuxième lame (5) a un nombre de trous (8) supérieur au nombre de trous des plaques (15) de manière à permettre la fixation de ladite lame arrière (5) audit bras correspondant (6) lequel la supporte selon des positions différentes espacées le long de l'alignement desdits trous (19).

## Claims

1. A spading machine having a plurality of tools (1) for digging over ground which are provided with one corresponding blade or spade (2) and each of which constitutes one of the sides of a linkage parallelogram (3) opposite the fixed side of said parallelogram structure formed by a tool-supporting frame (4), said tools (1) being provided with a second blade (5) disposed in series with the first blade, characterized in that each of the second blades (5) disposed in series with the first blade (2) is adapted to be positioned in an adjustable manner relative to the first blade respectively, at least as far as the digging depth and the turf (Z) cutting degree is concerned.

2. A spading machine according to claim 1, characterized in that the first blade (2) is held in an adjustable manner relative to the support thereof, at least as far as the digging depth and the turf (Z) cutting degree is concerned.

3. A spading machine according to claims 1 and 2, characterized in that the second blade (5) is supported by an arm (6) carrying the first blade (2) and provided with means for at least adjusting the position of the blade (5) including a series of aligned holes (8, 7b) formed in said blade (5) and arm (6) respectively for the passage of fastening means, the number of the holes (7b or 8) exhibited by said arm (6) or said blade (5) being greater that the number of holes necessary for the blade fastening to the corresponding arm (6).

4. A spading machine according to claims 1 and 3, characterized in that said rear blade (5) consists of a true blade (5a) perpendicular to the thickness of said arm (6), and of an arm (5b) integral therewith which is provided with said holes (8) and is disposed in coplanar relation with said tool-supporting arm (6), a pair of arm-retaining plates (15) being provided at the sides of said arms (5b, 6) and exhibiting holes in register with the holes (8, 7b) in said arm (6) and blade (5).

5. A tool for digging over the ground, to be used with a spading machine, said tool being provided with one corresponding blade or spade (2) constituting one of the sides of a linkage parallelogram (3) formed by a tool-supporting frame (4), and a second blade (5) disposed in series with the first blade, characterized in that the second blade (5) consists of a true blade (5a) perpendicular to the thickness of a tool-supporting arm (6), and an arm integral therewith which is provided with aligned holes (8) enabling the passage of fastening means formed in said blade (5) and arm (6) respectively, and is disposed in coplanar relation with said tool-supporting arm (6); a pair of arm-retaining plates (15) being provided at the sides of said arms (5b, 6), which plates exhibit holes in register with the holes (8, 7b) of said arm (6) and second blade (5) for the passage of fastening means designed to secure the second blade (5) in an adjustable manner relative to the first blade (2) at least as far as the digging depth and the tuft (Z) cutting degree is concerned; said arm-retaining plates (15) being provided with the same number of aligned holes (19) as the holes (7b) exhibited by the arm (6); and in that the arm (5b) of the second blade (5) has a number of holes greater that that of the plates (15) in order to enable said rear blade (5) to be fastened to the corresponding arm (6) that holds it according to different positions spaced apart from one another along the alignment of said holes (19).

## Patentansprüche

1. Spatenmaschine zum Umgraben des Bodens, versehen mit einer Anzahl von Werkzeugen (1) zum Umgraben des Bodens, die mit einem ersten entsprechenden Blatt oder Spaten (2) ausgestattet sind und jeweils eine der Seiten eines Parallelkurbel-Gelenlviereck (3) bilden, die der feststehenden Seite dieses Parallelviereck gegenüberliegt, welche von einem Tragrahmen (4) für die Werkzeuge gebildet wird, wobei die genannten Werkzeuge (1) wenigstens mit einem zweiten Blatt (5) versehen sind, in Reihe mit dem ersten angeordnet; **dadurch gekennzeichnet,** dass jedes der in Reihe mit dem ersten Blatt (2) angeordneten zweiten Blätter (5) geeignet ist, auf einstellbare Weise positioniert zu werden, und zwar jeweils im Verhältnis zu dem ersten Blatt und wenigstens entsprechend der Arbeitstiefe und dem Grad des Zerstossens der Schollen (Z).

2. Maschine nach Patentanspruch 1, **dadurch gekennzeichnet,** dass das erste Blatt (2) im Verhältnis zu seiner Halterung auf einstellbare Weise gehalten wird, und zwar wenigstens entsprechend der Arbeitstiefe und dem Grad des Zerstossens der Schollen (Z).

3. Maschine nach Patentanspruch 1 und 2, **dadurch gekennzeichnet,** dass das zweite Blatt (5) durch einen Arm (6) gehalten wird, der das erste Blatt (2) trägt und mit Einstellmitteln wenigstens des Blattes (5) versehen ist, enthaltend eine Reihe von zueinander ausgerichteten Bohrungen (7b) zum Durchführen der Befestigungsmittel, die in das genannte Blatt (5) beziehungsweise in den genannten Arm (6) eingearbeitet sind, wobei die Zahl der von dem genannten Arm (6) beziehungsweise von dem genannten Blatt (5) aufgewiesenen Bohrungen (7b oder 8) grösser ist als die Zahl der Bohrungen, die zum Befestigen letzteren an dem entsprechenden Arm (6) erforderlich sind.

4. Maschine nach Patentanspruch 1 und 3, **dadurch gekennzeichnet,** dass das genannte hintere Blatt (5) aus einer eigentlichen Klinge (5a) besteht, rechtwinklig zu der Stärke des genannten Arms (6) angeordnet, sowie aus einem mit dieser fest verbundenen Arm (5b), welcher mit den genannten Bohrungen (8) versehen und koplanar zu dem genannten Arm (6) zum Halten des Werkzeugs (1) angeordnet ist, wobei an den Seiten der genannten Arme (5b, 6) ein Paar von Platten (15) zum Festhalten derselben vorgesehen ist, versehen mit Bohrungen entsprechend den Bohrungen (8, 7b) des genannten Armes (6) und des genannten Blattes (5).

5. Werkzeug zum Umgraben des Bodens, zu verwenden an einer Spatenmaschine; wobei dieses Werkzeug mit einem entsprechenden Blatt oder Spaten (2) versehen ist, das eine Seite eines Parallelvierecks bildet, welches wiederum durch einen Rahmen (4) zum Tragen des Werkzeugs (1) und ein zweites, in Reihe zu dem ersten angeordneten Blatt (5) gebildet wird, **dadurch gekennzeichnet,** dass das zweite Blatt (5) eine eigentliche, rechtwinklig zu der Stärke eines Armes (6) zum Halten des genannten Werkzeuges angeordnete Klinge (5a), enthält, sowie einen mit dieser fest verbundenen Arm (5b), welcher mit zueinander ausgerichteten Bohrungen (8) versehen ist, um das Durchführen von Befestigungsmitteln zu erlauben, die in das genannte Blatt (5) und entsprechend in den genannten Arm (6) eingearbeitet sind, und der koplanar zu dem genannten Arm (6) zum Halten des Werkzeugs (1) angeordnet ist; wobei an den Seiten der genannten Arme (5b, 6) ein Paar von Platten (15) zum Festhalten derselben vorgesehen ist, versehen mit Bohrungen entsprechend zu den Bohrungen (8, 7b) des obengenannten Armes (6) und des genannten zweiten Blattes (5) zum Durchführen von Mitteln zur Befestigung des zweiten Blattes (5) auf einstellbare Weise und im Verhältnis zu dem ersten Blatt (2), wenigstens entsprechend der Arbeitstiefe und dem Grad des Zerstossens der Schollen (Z); und wobei die genannten Halteplatten (15) mit einer Anzahl von zueinander ausgerichteten Bohrungen (19) versehen sind, die der Zahl der von dem Arm (6) aufgewiesenen Bohrungen (7b) entspricht, und dadurch, dass der Arm (5b) des zweiten Blattes (5) eine grössere Anzahl von Bohrungen (B) aufweist als die Zahl der Bohrungen an den Platten (15), so dass die Befestigung des letztgenannten Blattes (5) an dem entsprechenden Arm (6) erlaubt ist, welcher dieses gemäss der unterschiedlichen, voneinander abstehenden Positionen entlang der Reihe der genannten Bohrungen (19) trägt.

FIG 1

FIG 4

# FIG 2

# FIG 3

EP 0 265 397 B1

# FIG 6

LT
h3
5b
5a
5
8
17
7b
1
9
6
11
fa
Z
2
2a
2b
h1

# FIG 5

LT
8
15
19
17
5b
7b
Z'
Z"
1
6
9
11
17
18
fa
h1